(19)

Europäisches Patentamt

European Patent Office

Office européen des brevets

(11) **EP 4 687 138 A1**

(12) **EUROPEAN PATENT APPLICATION**

(43) Date of publication:
**04.02.2026 Bulletin 2026/06**

(21) Application number: **25184497.3**

(22) Date of filing: **23.06.2025**

(51) International Patent Classification (IPC):
**G10L 15/22** $^{(2006.01)}$    **G06F 40/56** $^{(2020.01)}$

(52) Cooperative Patent Classification (CPC):
**G10L 15/22; G06F 40/35;** G06F 40/56;
G10L 2015/227

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.07.2024  IN 202421057749**

(71) Applicant: **Tata Consultancy Services Limited Maharashtra (IN)**

(72) Inventors:
• **DOKE, Pankaj Harish**
  Thane 400606 (IN)
• **KOPPARAPU, Sunil Kumar**
  Thane 400606 (IN)

(74) Representative: **Goddar, Heinz J.**
  **Boehmert & Boehmert**
  **Anwaltspartnerschaft mbB**
  **Pettenkoferstrasse 22**
  **80336 München (DE)**

(54) **INFORMATION-ENTROPY-BASED METRIC FOR USABLE MACHINE RESPONSE OF VOICE USER INTERFACE TO MATCH WITH COMMUNICATION ABILITY OF SPEAKER**

(57)    A method and system for Information-entropy-based metric for usable machine response of a Voice User Interface (VUI) to match with communication ability of a speaker is disclosed. The metric disclosed herein dynamically, on the fly analyses every received query for disfluencies such as 'hmm' and 'aah,' hesitation leading to pauses in speech, repetition, and vocabulary etc., to determine the property of the query in terms of communication ability or entropy in the query. A Large language Model (LLM) responding to the query is configured to generate and select and optimal response to the query such that efficiency of expression of the response to efficiency of expression of the query is minimal. Unlike the VUI analysis in the art, the interaction design for the VUI disclosed herein understands the mental model of the user (speaker) and communicate the system's response to the user in the user's language and communication style.

$$R^* = min_R \left( \left( \frac{\mathcal{P}\{R'\}}{\mathcal{P}\{R\}} \right) - \gamma_Q \right)$$

**FIG. 1B**

**Description**

CROSS-REFERENCE TO RELATED APPLICATIONS AND PRIORITY

The present application claims priority from Indian patent application no. 202421057749, filed on 30 July 2024.

TECHNICAL FIELD

The embodiments herein generally relate to the field of Human Computer Interaction (HCI) and, more particularly, to a method and system for Information-entropy-based metric for usable machine response of Voice User Interface (VUI) to match with communication ability of speaker.

BACKGROUND

Human Computer Interfaces and Interaction has been a topic of research for many decades. Graphical User Interfaces (GUIs) have been widely in use; however, voice-based interactions are taking lead with ease of availability of smart devices such as smartphones and smart speakers. Voice been a naturalistic medium of expression and communication and enables users with ease in human machine interaction, typically the tech illiterate or non-tech savvy users, referred to as Basic Emergent Users (BEUs) or Emergent Users (EU). Voice User Interfaces (VUIs) enable EUs to overcome the barriers present in the current design interventions and help increase adoption of technology.

Communication is effective if the user intent is rightly communicated to the machine and the generated machine response is equally understood by the user, which is a two way process. Further when effective communication is considered in context of the BEU, the VUI has its own challenges. One of the works in literature titled *"Challenges and Opportunities Designing Voice User Interfaces for Emergent Users"* by Pankaj Doke and Sunil Kumar Kopparapu, discusses the VUI with EU context.

The voice communication from a BEU can have speaker specific properties like use of speech disfluencies such as 'hmm' and 'aah,' hesitation leading to pauses in speech, repetition, and choice of words, etc. Given the observation that every user community has its own 'communal lexicon' and that EUs are under-researched and speak low-resource languages, training Artificial Intelligence models to respond in language of the BEU is challenging. Hardly any attempts have been made to enhance capability, effectiveness of the VUI by addressing such challenges and making VUIs more usable, with focus on the BEUs. As per the standards, the usability herein refers to the extent to which a product can be used by specified users to achieve specified goals with effectiveness, efficiency, and satisfaction in a specified context of use.

SUMMARY

Embodiments of the present disclosure present technological improvements as solutions to one or more of the above-mentioned technical problems recognized by the inventors in conventional systems.

For example, in one embodiment, a method for Information-entropy-based metric for usable machine response of Voice User Interface (VUI) to match with communication ability of speaker is provided. The method includes receiving from a speaker via a Voice User Interface (VUI), a spoken query sequence ($Q(t)$) comprising a number of sentences ($C_s$) a number of disfluencies, pauses, repetitions ($C_d$), and a number of syllables ($C_{sy}$).

Further the method includes converting the query sequence ($Q(t)$) to a recognized text ($Q$) via an Automated Speech Recognition (ASR) engine executed by the one or more hardware processors.

Further the method includes computing a first communication ability ($\mathcal{P}\{Q\}$) of the recognized text ($Q$) from entropy of the recognized text ($Q$) based on the number of disfluencies, pauses, repetitions ($C_d$), and the number of syllables ($C_{sy}$) present in the recognized text ($Q$).

Furthermore the method includes determining efficiency of expression ($\gamma_Q$) of the intent expressed by the recognized text ($Q$) by computing ratio of (i) a second communication ability ($\mathcal{P}\{Q_{abs}\}$) of an abstract summary ($Q_{abs}$) of the recognized text ($Q$) to (ii) the first communication ability ($\mathcal{P}\{Q\}$) of the recognized text *($Q$);*

Further the method includes generating by a Large Language Model (LLM) executed by the one or more hardware processors a text response ($R$) to the recognized query ($Q$), where the text response ($R$) comprises the number of disfluencies, pauses, repetitions ($C_d$) in the text response ($R$).

Further the method includes computing a third communication ability ($\mathcal{P}\{R\}$) of the VUI from entropy of the text response ($R$) based on the number of disfluencies, pauses, repetitions ($C_d$), and the number of syllables ($C_{sy}$) present in the text response ($R$).

Furthermore the method includes generating by the LLM (i) a detailed summary ($R'$) using a detailed summarization function applied on the text response ($R$), and (ii)a set of text responses {$set\ R$} by varying the number of sentences ($C_s$), the number of disfluencies, pauses, repetitions ($C_d$), and the number of syllables ($C_{sy}$) in the text response ($R$).

Further the method includes determining an efficiency of expression of the text response ($R$) by computing ratio of (i) a fourth communication ability [$\mathcal{P}\{R'\}$] from entropy of a detailed summary ($R'$) of the text response ($R$) to (ii) the third communication ability [$\mathcal{P}\{R\}$] of each of a corresponding text response ($R$) from the set of text responses {$set\ R$}.

Further the method includes selecting an optimal text response ($R^*$) from the set of text responses {$set\ R$} for which difference between efficiency of expression of the text response ($R$) and the efficiency of expression ($\gamma_Q$) of the recognized text ($Q$) is minimal.

Further the method includes converting the optimal text response ($R^*$) to a machine speech response ($R(t)$) via a Text to Speech (TTS) engine.

Furthermore the method includes communicating via the VUI, the machine speech response ($R(t)$) to the speaker as a response to spoken query sequence ($Q(t)$).

In another aspect, a system for Information-entropy-based metric for usable machine response of Voice User Interface (VUI) to match with communication ability of speaker is provided. The system comprises a memory storing instructions; one or more Input/Output (I/O) interfaces; and one or more hardware processors coupled to the memory via the one or more I/O interfaces, wherein the one or more hardware processors are configured by the instructions to receive from a speaker via a Voice User Interface (VUI), a spoken query sequence ($Q(t)$) comprising a number of sentences ($C_s$) a number of disfluencies, pauses, repetitions ($C_d$), and a number of syllables ($C_{sy}$).

Further the one or more hardware processors are configured to convert the query sequence ($Q(t)$) to a recognized text ($Q$) via an Automated Speech Recognition (ASR) engine executed by the one or more hardware processors.

Further the one or more hardware processors are configured to compute a first communication ability ($\mathcal{P}\{Q\}$) of the recognized text ($Q$) from entropy of the recognized text ($Q$) based on the number of disfluencies, pauses, repetitions ($C_d$), and the number of syllables ($C_{sy}$) present in the recognized text ($Q$).

Furthermore the one or more hardware processors are configured to determine efficiency of expression ($\gamma_Q$) of the intent expressed by the recognized text ($Q$) by computing ratio of (i) a second communication ability ($\mathcal{P}\{Q_{abs}\}$) of an abstract summary ($Q_{abs}$) of the recognized text ($Q$) to (ii) the first communication ability ($\mathcal{P}\{Q\}$) of the recognized text ($Q$);

Further the one or more hardware processors are configured to generate by a Large Language Model (LLM) executed by the one or more hardware processors a text response ($R$) to the recognized query ($Q$), where the text response ($R$) comprises the number of disfluencies, pauses, repetitions ($C_d$) in the text response ($R$).

Further the one or more hardware processors are configured to compute a third communication ability ($\mathcal{P}\{R\}$) of the VUI from entropy of the text response ($R$) based on the number of disfluencies, pauses, repetitions ($C_d$), and the number of syllables ($C_{sy}$) present in the text response ($R$).

Furthermore the one or more hardware processors are configured to generate by the LLM (i) a detailed summary ($R'$) using a detailed summarization function applied on the text response ($R$), and (ii)a set of text responses {$set\ R$} by varying the number of sentences ($C_s$), the number of disfluencies, pauses, repetitions ($C_d$), and the number of syllables ($C_{sy}$) in the text response ($R$).

Further the one or more hardware processors are configured to determine an efficiency of expression of the text response ($R$) by computing ratio of (i) a fourth communication ability [$\mathcal{P}\{R'\}$] from entropy of a detailed summary ($R'$) of the text response ($R$) to (ii) the third communication ability [$\mathcal{P}\{R\}$] of each of a corresponding text response ($R$) from the set of text responses {$set\ R$}.

Further the one or more hardware processors are configured to select an optimal text response ($R^*$) from the set of text responses {$set\ R$} for which difference between efficiency of expression of the text response ($R$) and the efficiency of expression ($\gamma_Q$) of the recognized text ($Q$) is minimal.

Further the one or more hardware processors are configured to convert the optimal text response ($R^*$) to a machine speech response ($R(t)$) via a Text to Speech (TTS) engine.

Furthermore the one or more hardware processors are configured to communicate via the VUI, the machine speech response ($R(t)$) to the speaker as a response to spoken query sequence ($Q(t)$).In yet another aspect, there are provided one or more non-transitory machine-readable information storage mediums comprising one or more instructions, which when executed by one or more hardware processors causes a method for Information-entropy-based metric for usable machine response of Voice User Interface (VUI) to match with communication ability of speaker.

The method includes receiving from a speaker via a Voice User Interface (VUI), a spoken query sequence ($Q(t)$) comprising a number of sentences ($C_s$) a number of disfluencies, pauses, repetitions ($C_d$), and a number of syllables ($C_{sy}$).

Further the method includes converting the query sequence ($Q(t)$) to a recognized text ($Q$) via an Automated Speech Recognition (ASR) engine executed by the one or more hardware processors.

Further the method includes computing a first communication ability ($\mathcal{P}\{Q\}$) of the recognized text ($Q$) from entropy of the recognized text ($Q$) based on the number of disfluencies, pauses, repetitions ($C_d$), and the number of syllables ($C_{sy}$) present in the recognized text ($Q$).

Furthermore the method includes determining efficiency of expression ($\gamma_Q$) of the intent expressed by the recognized text ($Q$) by computing ratio of (i) a second communication ability ($\mathcal{P}\{Q_{abs}\}$) of an abstract summary ($Q_{abs}$) of the recognized text ($Q$) to (ii) the first communication ability ($\mathcal{P}\{Q\}$) of the recognized text ($Q$);

Further the method includes generating by a Large Language Model (LLM) executed by the one or more hardware processors a text response ($R$) to the recognized query ($Q$), where the text response ($R$) comprises the number of disfluencies, pauses, repetitions ($C_d$) in the text response ($R$).

Further the method includes computing a third communication ability ($\mathcal{P}\{R\}$) of the VUI from entropy of the text response ($R$) based on the number of disfluencies, pauses, repetitions ($C_d$), and the number of syllables ($C_{sy}$) present in the text response ($R$);

Furthermore the method includes generating by the LLM (i) a detailed summary ($R'$) using a detailed summarization function applied on the text response ($R$), and (ii) a set of text responses $\{set\ R\}$ by varying the number of sentences ($C_s$), the number of disfluencies, pauses, repetitions ($C_d$), and the number of syllables ($C_{sy}$) in the text response ($R$).

Further the method includes determining an efficiency of expression of the text response ($R$) by computing ratio of (i) a fourth communication ability [$\mathcal{P}\{R'\}$] from entropy of a detailed summary ($R'$) of the text response ($R$) to (ii) the third communication ability [$\mathcal{P}\{R\}$] of each of a corresponding text response ($R$) from the set of text responses $\{set\ R\}$.

Further the method includes selecting an optimal text response ($R^*$) from the set of text responses $\{set\ R\}$ for which difference between efficiency of expression of the text response ($R$) and the efficiency of expression ($\gamma_Q$) of the recognized text ($Q$) is minimal.

Further the method includes converting the optimal text response ($R^*$) to a machine speech response ($R(t)$) via a Text to Speech (TTS) engine.

Furthermore the method includes communicating via the VUI, the machine speech response ($R(t)$) to the speaker as a response to spoken query sequence *(Q(t))*.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for information-entropy-based metric for usable machine response of Voice User Interface (VUI) to match with communication ability of a speaker, in accordance with some embodiments of the present disclosure.

FIG. 1B illustrates an architectural overview of the system of FIG. 1A, in accordance with some embodiments of the present disclosure.

FIGS. 2A through 2C (collectively referred as FIG. 2) is a flow diagram illustrating a method for information-entropy-based metric for usable machine response of the VUI to match with communication ability of the speaker, using the system depicted in FIG. 1A and 1B, in accordance with some embodiments of the present disclosure.

FIG. 3 depicts variation in properties of a query based on variations in disfluencies and syllables present in the query, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As discussed above Voice User Interface (VUI) design needs to be explored further. Very few attempts are seen towards evaluation of VUI design used by a system. Furthermore, even though evaluation is discussed in the art, such as seen in work titled *"VORI: A framework for testing voice user interface interactability"* by Abrar S. Alrumayh, and Chiu C. Tan, the focus of evaluation metric is more on interpretation of user commands by the VUI. The above literature proposes a score, which essentially is a measure of how many of the possible queries to the VUI app can it understand. The measure is based on "collecting the possible set of queries" (a number) and then identifying "again a number" of queries a particular application understand. There is no effort to evaluate and enhance VUI beyond semantic aspect of the query and the response. Thus, the existing research on VUI hardly has any focus on evaluation of the VUI to observe the ability of a machine to understanding user intent and respond in user understandable and usable manner. Furthermore, as discussed above, when user or speaker posing the query is an Basic Emergent User (BEU), VUI faces unique challenges due to speaker specific properties like use of speech disfluencies such as 'hmm' and 'aah,' hesitation leading to pauses in speech, repetition, and choice of words, etc. BEU specific VUI is hardly explored field in due to technical challenges in speech processing by addressing speech properties that are introduced as a result of speaker being a BEU. It can be noted that speaker, also referred to as user, herein refers to user communicating orally, using voice as medium, with a machine over Voice User Interface. As understood the BEU most of the times will be comfortable using local language as medium to converse with machines as well. Given the observation that every user community has its own 'communal lexicon' and that EUs are under-researched and speak low-resource languages tuning machine response to queries to match user specific communication style is technically challenging and needs to be addressed.

Embodiments of the present disclosure provide a method and system for Information-entropy-based metric for usable machine response of a Voice User Interface (VUI) to match with communication ability of a speaker to address the above mentioned technical challenges. The metric disclosed herein dynamically, on the fly analyses every received query for disfluencies such as 'hmm' and 'aah,' hesitation leading to pauses in speech, repetition, and vocabulary etc., to determine the property of the query in terms of communication ability or entropy in the query. Generative Artificial Intelligence (GenAI) language models such as a Large language Model (LLM), that responds to the query is configured to generate and select and optimal response to the query such that efficiency of expression of response to efficiency of expression of the query is minimal.

Unlike the VUI analysis in the art, the interaction design for the VUI disclosed herein understands the mental and communication model of the user (speaker) and communicate the system's response to the user in the user's language and communication style using concept of information-entropy. This makes the system response being more understandable, hence more usable, specifically in BEU context.

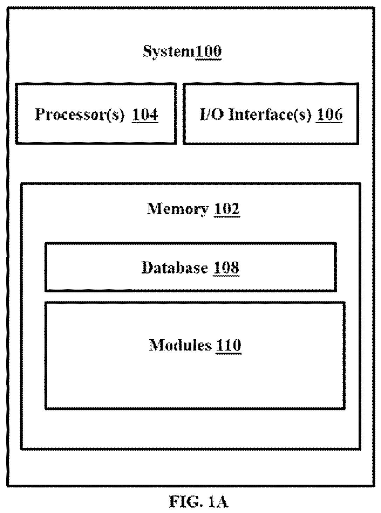

Referring now to the drawings, and more particularly to FIGS. 1A through 3, where similar reference characters denote corresponding features consistently throughout the figures, there are shown preferred embodiments, and these embodiments are described in the context of the following exemplary system and/or method.

FIG. 1A is a functional block diagram of a system 100 for Information-entropy-based machine response optimization of VUI to match with communication ability of a speaker, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface, the Voice User Interface (VUI) and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

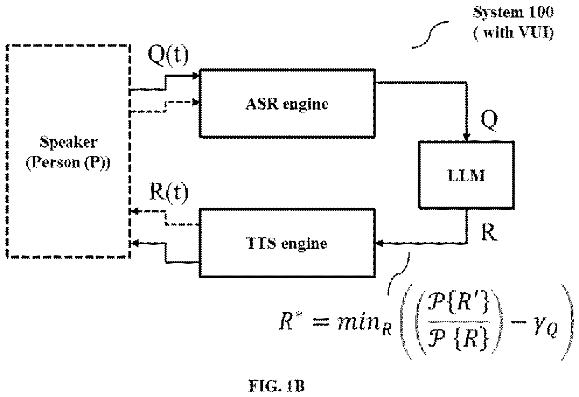

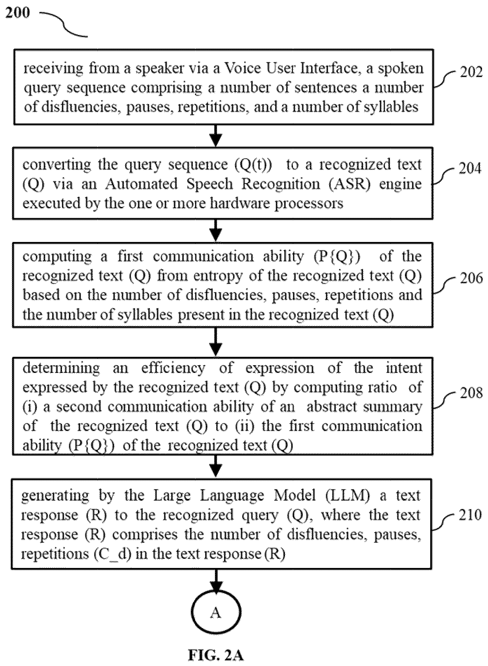

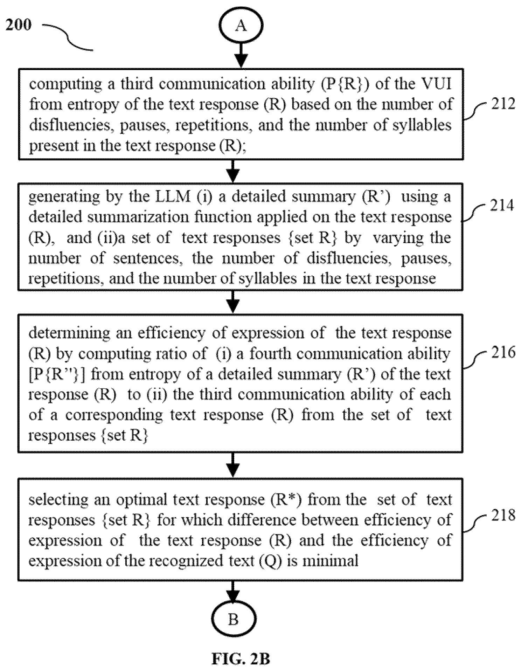

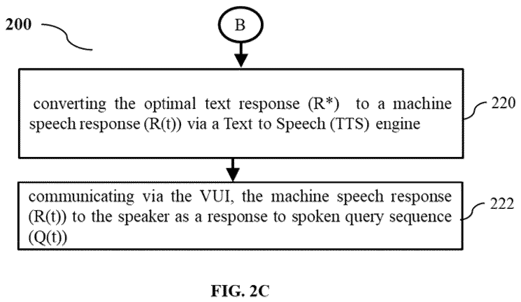

In an embodiment, the memory 102 includes a plurality of modules 110 such as an Automated Speech Recognition (ASR) engine, a Large Language Model (LLM), and a Text to Speech (TTS) engine, as depicted in FIG. 1B. FIG. 1B is better explained in conjunction with steps of flow diagram of FIG. 2.

The plurality of modules 110 include programs or coded instructions that supplement applications or functions performed by the system 100 for executing different steps involved in the process of the information-entropy-based machine response optimization of the VUI to match with communication ability of the speaker. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110.

Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagram in FIG. 2.

FIG. 1B depicts communication exercise on the VUI provided by the system 100. The FIG. 1B explains the how information entropy is applied to evaluate VUI design of the system 100 using the information-entropy-based metric, wherein the equation provided for the metric enables selecting an optimal response to be communicated with user or speaker, such that the selected response is the best usable response best understood by the speaker.

As seen in FIG. 1B, the VUI is depicted as communication exercises between the human or speaker, for example the BEU, also referred to as EU, and the machine (the system) which comprises elements such as the ASR engine, TTS engine and the LLM. The speaker (EU) system communication exercises can be viewed as conversations (or a dialogue) between the human and machine, where the machine is treated as a Social Actor.

Let the conversation $\mathcal{C} = \{Q(t)_i, R(t)_i\}_{i=1}^{N}$ comprises of a sequence of $N$ human spoken queries ($Q(t)$) and machine spoken responses ($R(t)$). Typically $N$ depends on the type of transaction between the human and the machine. For example if the user wants to find the time of the day ($Q(t)$ = "What is the time of the day"; $R(t)$ = "It is 1200 noon") then $N$ = 1 (as seen in FIG. 1B). Assumed is that a VUI with good user experience, not only requires the $R(t)$ to be semantically related (solid line, FIG. 1B) to the spoken $Q(t)$ but it also requires the spoken $R(t)$ to match the properties (dotted lines, FIG. 1B) of spoken $Q(t)$ for the conversation to be empathetic and relatable. Let $\mathcal{P}\{x\}$ be a measure of the communication ability of $x$ ($x : Q(t), R(t)$). The spoken $R(t)$ is said to match the human spoken query $Q(t)$ if the properties of both $Q(t)$ and $R(t)$ match, namely,

$$\mathcal{P}\{Q(t)\} = \mathcal{P}\{R(t)\} \qquad (1)$$

Assumed is that that the machine (system 100) response $R(t)$ is semantically relevant to the human query $Q(t)$ and is not part of $\mathcal{P}\{x\}$. The conversation exercise happens on a primary information signaling channel (message to be communicated or the linguistic part of the speech, solid line FIG. 1B) aided by a control channel (speaker specific idiosyncrasies like use of speech disfluencies such as hmm and aah, hesitation leading to pauses in speech, repetition, and choice of words, etc., dotted line if FIG. 1). Since EUs have an ill-equipped notion of computing systems based on which specific persona is been addressed, there is a high probability that this conversation would need to be interlocuted by both the participating entities.

For example, in a $Q(t)$ the information signaling channel would be frequently interrupted by the control channel leading to high error rates in understanding $Q(t)$ by the computing system and vice-versa.

For example $Q(t)$ ="What hmm is **<pause>** is the time **aah** of the **d** day", where bold text corresponds to the control channel.

This would significantly delay the joint activity of formation of the common ground between the EU and the system 100. Given the observation that every user community has its own 'communal lexicon," and that EUs are under researched and speak low-resource languages, significant usage of the control channel cannot be under-emphasized.

The system herein utilizes a property function $\mathcal{P}\{.\}$, which is a measure or marker to indicate as a proxy measure, to the machine, that it is conversing with an EU. Furthermore, due to the lack of adequate data and information on mental and communication models of EUs, the same cannot be used by the computing systems to aid rapid achievement of common ground, raising the research question of how to train such systems in the absence of data about EUs. In this context, it is hypothesized that Shannon's Information Theory can play a handy role in modeling the control channel capacity to quantify the capacity of the overall system when dealing with an EU.

Considered is a situation where the EU is having a conversation with a Machine (system 100 via the VUI). Something not unlike a monologue, represented by $Q(t)$ where '$t$' is the time. Let $\mathcal{P}\{Q(t)\}$ be the communication ability of the user (speaker). Assumed is $Q(t)$ to be synonymous with person and $R(t)$ a machine Thus, the VUI can be modelled as a communication exercise between two entities, the machine $M(\equiv R(t))$ and the EU user, $P (\equiv Q(t))$. Thus, system V is a communication system comprised of $M$ and $P$ (FIG. 1B), namely, $V = (\mathcal{P}\{Q(t)\}, \mathcal{P}\{R(t)\})$ and is such that there is a symmetric relation between $M$ and $\mathcal{P}$ since $M$ desires to exhibit communicative empathy to $P$ ('voice of the user').

In terms of Interaction Design, this means to understand the mental model of the user and communicate the system's conceptual model to the user in the user's language and communication style. In other words, the machine must behave such that $\mathcal{P}\{R(t)\}$ should match $\mathcal{P}\{Q(t)\}$. While behaving as such, it should also be cognizant of the cognitive capabilities of the user and respect constraints like Miller's Theorem relating to short term processing memory.

There is a distinct difference between spoken language text (slt) and written language text (wlt). While the wlt is devoid of any disfluencies, the slt has significant amount of disfluencies. This is one of the reasons why it is necessary for $\mathcal{P}\{Q(t)\} = \mathcal{P}\{R(t)\}$ for seamless interaction between M and P. It can be observed that the spoken $Q(t)$ can comprise of several sentences, each sentence is made up of words and also contains pauses and disfluencies.

Let $C_s$, $C_d$, $C_{sy}$ represent the number of sentences and number of disfluencies, pauses, repetition all included and number of syllables in $Q(t)$ respectively. The communication ability is defined as the entropy of $Q(t)$, namely,

$$\mathcal{P}\{Q(t)\} = -log_2\left(C_d \times \left(\frac{C_{sy}}{C_s}\right) \times C_s\right) = -log_2\left(C_d \times C_{sy}\right) \qquad (2)$$

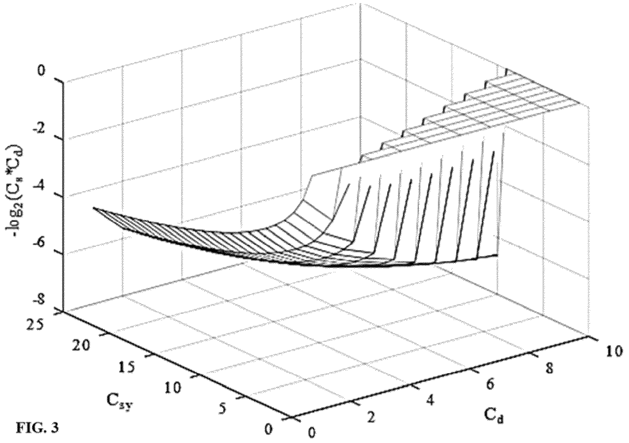

From (2) it can be observed that $\mathcal{P}\{Q(t)\} = 1$ when $C_d = 0$, namely, no disfluencies implying best communication ability of EU. Further, $C_d$ is a function of $C_s$ and $C_d$ is less than $C_{sy}$. As seen in FIG. 3, which is a plot of $\mathcal{P}\{Q(t)\}$ for different values of $Ca$ and $C_{sy}$, $\mathcal{P}\{Q(t)\}$ decreases with increases in both $C_d$ and $C_{sy}$ making it more difficult for ASR engine to recognize $Q(t)$ spoken by EU (either because of increased number of disfluencies or increased number of syllables or both). So, if the EUs is an archetype of a BEU or EU, and uses $C_s = 3$ sentences to express a concept, with a count of $\frac{C_{sy}}{C_s} = 7$ syllables per sentence and uses $C_d = 2$ disfluencies, then $P\{Q(t)\} = -log_2(2 \times 7 \times 3) = -5.392$. Using the User-Usage model, it can be argued that when $M$ generates a response, $R(t)$, should be such that $\mathcal{P}\{R(t)\} \approx 5.392$. Use of such metrics of evaluation would be useful during the engineering evaluation of a system where it would be a challenge to generate empirical data.

As seen in FIG. 1B, the EU query $Q(t)$ is converted to recognized text $(Q)$ by ASR and $Q$ is used to query an LLM; the text response from the LLM $(R)$ is converted into audio using a TTS to generate $R(t)$.

However, the text response $R$ is wlt and as a result $R(t)$ is devoid of any disfluencies, meaning $\mathcal{P}\{R(t)\} = 1$ leading to a mismatch with $\mathcal{P}\{Q(t)\}$. Let $Q_{abs}$ be the abstract summary of $Q$, namely

$$Q_{abs} = GenAI_{abs}(Q) \qquad (3)$$

Where, $GenAI_{abs}(x)$ is an abstract summarization function that generates the abstract summary of $x$.

$$\gamma_Q = \frac{\mathcal{P}\{Q_{abs}\}}{\mathcal{P}\{Q\}} \qquad (4)$$

Where $(\gamma_Q)$ is efficiency of expression of the intent expressed by the recognized text $(Q)$

If the EU communicates 'perfectly' then $Q_{abs} = Q$. In practice, $\gamma \leq 1$. Based on our subjective eld experiences, $\gamma_Q$ to

be more practically to be 0.7 for WEIRD users and about 0.2 for EU. This implies that the EU takes more sentences, has more disfluencies and errors in communicating with the machine. Conversely, given the symmetric nature of the conversation to achieve 'common ground , the machine generates a response for the user.

In this context, GenAI$_{det}(x)$ is a detailed summarization function used that generates a detailed summary of $x$. Note that the goal of the machine is to generate multiple $R' = $ GenAI$_{det}(R)$ and choose the optimal $R^*$, such that,

$$R^* = min_R \left( \left( \frac{\mathcal{P}\{R'\}}{\mathcal{P}\{R\}} \right) - \gamma_Q \right)^2 \qquad (5)$$

Thus, the communication system comprising the EU and the machine could be modelled for assessment of the efficacy of communication using an objective score, P{.} as in equation (1) and this score could be used to compare different systems on a comparative basis.

FIGS. 2A through 2C (collectively referred as FIG. 2) is a flow diagram illustrating a method 200 for information-entropy-based machine response optimization of the VUI to match with communication ability of the speaker, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured by the programmed instructions to receive from a speaker, for example, the speaker of archetype as BEU, via the VUI, a spoken query sequence ($Q(t)$). $Q(t)$ comprises a number of sentences ($C_s$) and additionally a number of disfluencies, pauses, repetitions ($C_d$), and a number of syllables ($C_{sy}$). The steps of the method 200 are explained with an illustrative example as depicted in Table 1, wherein a sample user query is analyzed by the system 100 to generate and communicate the usable response to the speaker ( user/ EU).

At step 204 of the method 200, the one or more hardware processors 104 are configured by the instruction to convert the query sequence ($Q(t)$) to a recognized text ($Q$) via the Automated Speech Recognition (ASR) engine executed by the one or more hardware processors.

At step 206 of the method 200, the one or more hardware processors 104 are configured by the instructions to compute a first communication ability ($\mathcal{P}\{Q\}$) of the speaker comprising entropy of the recognized text ($Q$). The computation is based on equation 2 above in accordance with the number of disfluencies, pauses, repetitions ($C_d$), and the number of syllables ($C_{sy}$) present in the recognized text ($Q$).

At step 208 of the method 200, the one or more hardware processors 104 are configured by the instructions to determine the efficiency of expression ($\gamma_Q$) of the intent expressed by the recognized text (Q). The $\gamma_Q$ is computed as ratio a second communication ability ($\mathcal{P}\{Q_{abs}\}$) of an abstract summary of the recognized text query to the first communication ability ($\mathcal{P}\{Q\}$) of the recognized text Q as in equation 4. The abstract summary ($Q_{abs}$) is obtained from the abstract summarization function executed by a Large Language Model (LLM) on the recognized text query.

At step 210 of the method 200, the one or more hardware processors 104 are configured by the instructions to generate via the Large Language Model (LLM) a text response ($R$) to the recognized query ($Q$). The text response ($R$) comprises the number of disfluencies, pauses, repetitions ($C_d$),

The abstract summary, the detailed summary and the text response to the query is handled same LLM. Thus, the 'treatment/intervention' is by the same LLM, thus if there any biases in the abstract summary, the detailed summary, and the text response, they are cancelled out. With different LLM per function, there would be chances of introducing variability in the system. Thus, with single LLM as disclosed herein, it eliminates a difficult task of dealing with "how one LLM if baselined, is different from each other, and their relative merits and demerits.

The LLM used herein can be any LLMs such as Chat GPT and the like to provide the response for the input received from output of the ASR engine.

At step 212 of the method 200, the one or more hardware processors 104 are configured by the instructions to compute a third communication ability ($\mathcal{P}\{R\}$) of the VUI comprising entropy of the text response ($R$) based on the number of disfluencies, pauses, repetitions ($C_d$), and the number of syllables ($C_{sy}$) present in the text response (R). This can be seen in the example of table 1 below.

At step 214 of the method 200, the one or more hardware processors 104 are configured by the instructions to generate by the LLM:

(i) a detailed summary ($R'$) using the detailed summarization function ($GenAI_{det}(x)$) applied on the text response ($R$), and
(ii) a set of text responses {*set R*} by varying the number of sentences ($C_s$), the number of disfluencies, pauses, repetitions ($C_d$), and the number of syllables ($C_{sy}$) in the text response ($R$);

At step 216 of the method 200, the one or more hardware processors 104 are configured by the instructions to determine an efficiency of expression of the text response ($R$) by computing ratio of a fourth communication ability [$\mathcal{P}\{R'\}$] comprising entropy of detailed summary ($R'$), to the third communication ability [$\mathcal{P}\{R\}$] of each of a corresponding text response ($R$) from a set of text responses {*set R*}. 3 varying responses ($R$) generated by the LLM are depicted in example below. The detailed summary ($R'$) is obtained from a detailed summary function executed by the LLM on the text response ($R$).

At step 218 of the method 200, the one or more hardware processors 104 are configured by the instructions to select the optimal text response ($R^*$) from the set of text responses {*set R*} for which difference between efficiency of expression of the text response ($R$) and the efficiency of expression ($\gamma_Q$) of the recognized text ($Q$) is minimal. Example below explains the processing of the user query by the system 100 to communicate the generated response to the speaker in most user understandable manner. At step 220 of the method 200, the one or more hardware processors 104 are configured by the instructions to convert the optimal text response ($R^*$) to a machine speech response ($R(t)$) via the Text to Speech (TTS) engine.

At step 222 of the method 200, the one or more hardware processors 104 are configured by the instructions to communicate via the VUI, the machine speech response ($R(t)$) to the speaker as a response to spoken query sequence ($Q(t)$).

**Example 1:**

- *Spoken query Q(t) from a BEU*
  *"Uhmm... hello? Aah... namaste... uh... bank... bank balance... uh... dekhna tha... mera... balance... kitna hai? Uh... aap... bata sakte hain? Mera... account number... hai... 1234567890. Haan... bas... itna hi... balance dekhna tha. Thank you... aah... dhanyavaad."*

$$(C_d) = 6;\ (C_{sy}) = 56$$

$$from\ equation\ 2, (\mathcal{P}\{Q\}) = -log_2(C_d \times C_{sy}) = -8.39$$

*from equation 3 abstract summary of spoken query is $Q_{abs}$ = GenAI$_{abs}$(Q) "The speaker is calling a bank to inquire about their account balance, providing their account number and asking for the current balance. "*

$$(C_{abs(d)}) = 1;\ (C_{abs(sy)}) = 37$$

$$\mathcal{P}\{Q_{abs}\} = -5.21$$

- *Efficiency of expression of the intent expressed by the recognized text (Q)*

$$\gamma_Q = \frac{\mathcal{P}\{Q_{abs}\}}{\mathcal{P}\{Q\}} = 0.62$$

- *Generating recognized text query by ASR engine, and LLM processing of the recognized text query to generate set of text responses {set R}*

*Text Response 1(R1)*

"Uh... namaste... aah... aapka balance... uh... dekhte hain. Uhmm... account number... 1234567890... uh... theek hai. Aah... aapka balance... hai... 5,000 rupees.
Uhmm... aur kuch... madad chahiye? Aah... dhanyavaad... phir milte hain"

$$(C_d) = 8; \; (C_{sy}) = 47$$

$$\mathcal{P}\{R\} = -8.55$$

*Text Response 2 (R2)*
*Namaste! Uhmm... bank balance... umm... check karna hai? Account number... aah... dijiye. Checking... umm... aapka balance... uhmm... 5000 rupees hai. Dhanyavaad.*

$$(C_d) = 6; \; (C_{sy}) = 56$$

$$\mathcal{P}\{R\} = -8.28$$

*Text Response 3 (R3)*
*"Namaste! Uhmm... bank balance... umm... check karna hai? Account number... aah... dijiye. Checking... umm... aapka balance... uhmm... 5000 rupees hai. Dhanyavaad. "*

$$(C_d) = 6; \; (C_{sy}) = 56$$

$$\mathcal{P}\{R\} = -8.37$$

- *Generating detailed summary (R')of the response using* GenAI$_{det}$(x) *as below:*
  *"The speaker greets the customer and proceeds to check the account balance. They confirm the account number, 1234567890, and inform the customer that the balance is 5,000 rupees. They then ask if the customer needs any further assistance and conclude the conversation with a thank you and a polite goodbye. "*

Table 1 below provides computing optimal response from varied responses generated by the LLM. Table 1 indicates Response R1 provides minimal value of difference square, hence from the varies responses will be better understood by the speaker as it most matches with user speech properties. The method 200 disclosed makes LLM iterate over the generated responses so that the actual response to be communicates with speaker is not ideal machine minimalistic word response, which may be less understood and usable to user. Moreover the response is such that has speech properties that max match with use speech properties.

Table 1

| $C_d$ =R'd | $C_{sy}$=R'sy | $\mathcal{P}\{R'\}$ | $\frac{\mathcal{P}\{R'\}}{\mathcal{P}\{R\}}$ for R= R1 R2, R3 | **DiffSquared = $R^*$** $= min_R\left(\left(\left(\frac{\mathcal{P}\{R'\}}{\mathcal{P}\{R\}}\right) - \gamma_Q\right)^2\right)$ |
|---|---|---|---|---|
| 1 | 78 | -6.29 | 0.735672515 | **0.013380131 for R1** |
| | | | 0.759661836 | 0.019505428 for R2 |
| | | | 0.751493429 | 0.017290522 for R3 |

The optimal machine speech response (R(t)) obtained from the optimal text response ($R^*$) in the speech domain reduces mismatch between a communication ability ($\mathcal{P}\{Q(t)\}$) of the speaker and the communication ability of the VUI ($\mathcal{P}\{R(t)\}$)below a predefined threshold providing most usable response communicated to the speaker for the spoken query sequence ($Q(t)$).

Even though the method and system is explained in context of single user and machine communication, it can be expanded to received queries from multiple users..

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), the method comprising:

   receiving from a speaker (202), by one or more hardware processors via a Voice User Interface (VUI), a spoken query sequence ($Q(t)$) comprising a number of sentences ($C_s$) a number of disfluencies, pauses, repetitions ($C_d$), and a number of syllables ($C_{sy}$);
   converting (204) the query sequence ($Q(t)$) to a recognized text ($Q$) via an Automated Speech Recognition (ASR) engine executed by the one or more hardware processors;

computing (206), by the one or more hardware processors, a first communication ability ($\mathcal{P}\{Q\}$) of the recognized text ($Q$) from entropy of the recognized text ($Q$) based on the number of disfluencies, pauses, repetitions ($C_d$), and the number of syllables ($C_{sy}$) present in the recognized text ($Q$);

determining (208), by the one or more hardware processors, an efficiency of expression ($\gamma_Q$) of the intent expressed by the recognized text ($Q$) by computing ratio of (i) a second communication ability ($\mathcal{P}\{Q_{abs}\}$) of an abstract summary ($Q_{abs}$) of the recognized text ($Q$) to (ii) the first communication ability ($\mathcal{P}\{Q\}$) of the recognized text ($Q$);

generating (210), by a Large Language Model (LLM) executed by the one or more hardware processors a text response ($R$) to the recognized query ($Q$), where the text response ($R$) comprises the number of disfluencies, pauses, repetitions ($C_d$) in the text response ($R$);

computing (212), by the one or more hardware processors, a third communication ability ($\mathcal{P}\{R\}$) of the VUI from entropy of the text response ($R$) based on the number of disfluencies, pauses, repetitions ($C_d$), and the number of syllables ($C_{sy}$) present in the text response (R);

generating (214) by the LLM (i) a detailed summary ($R'$) using a detailed summarization function applied on the text response ($R$), and (ii)a set of text responses {$set\,R$} by varying the number of sentences ($C_s$), the number of disfluencies, pauses, repetitions ($C_d$), and the number of syllables ($C_{sy}$) in the text response ($R$);

determining (216) an efficiency of expression of the text response ($R$) by computing ratio of (i) a fourth communication ability [$\mathcal{P}\{R'\}$] from entropy of a detailed summary ($R'$) of the text response ($R$) to (ii) the third communication ability [$\mathcal{P}\{R\}$] of each of a corresponding text response ($R$) from the set of text responses {$set\,R$};

selecting (218), by the one or more hardware processors, an optimal text response ($R^*$) from the set of text responses {$set\,R$} for which difference between efficiency of expression of the text response ($R$) and the efficiency of expression ($\gamma_Q$) of the recognized text ($Q$) is minimal;

converting (220), by the one or more hardware processors, the optimal text response ($R^*$) to a machine speech response ($R(t)$) via a Text to Speech (TTS) engine; and

communicating (222), by the one or more hardware processors via the VUI, the machine speech response ($R(t)$) to the speaker as a response to spoken query sequence ($Q(t)$).

2. The method as claimed in claim 1, wherein the abstract summary ($Q_{abs}$) is obtained from an abstract summarization function (GenAI$_{abs}$($x$)) executed by the LLM on the recognized text query, and wherein the detailed summary ($R'$) is obtained via a detailed summary function (GenAI$_{det}$($x$)) executed by the LLM on the text response ($R$).

3. The method as claimed in claim 1, wherein the optimal text response ($R^*$) is mathematically represented as

$$R^* = min_R\left(\left(\frac{\mathcal{P}\{R'\}}{\mathcal{P}\{R\}}\right) - \gamma_Q\right).^2$$

4. The method as claimed in claim 1, wherein the speaker is a Basic Emergent User (BEU).

5. The method as claimed in claim 1, wherein the optimal machine speech response (R(t)) obtained from the optimal text response ($R^*$) in the speech domain reduces mismatch between a communication ability ($\mathcal{P}\{Q(t)\}$) of the speaker and the communication ability of the VUI ($\mathcal{P}\{R(t)\}$)below a predefined threshold providing most usable response communicated to the speaker for the spoken query sequence ($Q(t)$).

6. A system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive from a speaker via a Voice User Interface (VUI), a spoken query sequence ($Q(t)$) comprising a number of sentences ($C_s$) a number of disfluencies, pauses, repetitions ($C_d$), and a number of syllables ($C_{sy}$);
convert the query sequence ($Q(t)$) to a recognized text ($Q$) via an Automated Speech Recognition (ASR) engine executed by the one or more hardware processors;

compute a first communication ability ($\mathcal{P}\{Q\}$) of the recognized text ($Q$) from entropy of the recognized text ($Q$) based on the number of disfluencies, pauses, repetitions ($C_d$), and the number of syllables ($C_{sy}$) present in the recognized text ($Q$);

determine efficiency of expression ($\gamma_Q$) of the intent expressed by the recognized text ($Q$) by computing ratio of (i) a second communication ability ($\mathcal{P}\{Q_{abs}\}$) of an abstract summary ($Q_{abs}$) of the recognized text ($Q$) to (ii) the first communication ability ($\mathcal{P}\{Q\}$) of the recognized text ($Q$);

generate by a Large Language Model (LLM) executed by the one or more hardware processors a text response ($R$) to the recognized query ($Q$), where the text response ($R$) comprises the number of disfluencies, pauses, repetitions ($C_d$) in the text response ($R$);

compute a third communication ability ($\mathcal{P}\{R\}$) of the VUI from entropy of the text response ($R$) based on the number of disfluencies, pauses, repetitions ($C_d$), and the number of syllables ($C_{sy}$) present in the text response ($R$);

generate by the LLM (i) a detailed summary ($R'$) using a detailed summarization function applied on the text response ($R$), and (ii) a set of text responses {$set\ R$} by varying the number of sentences ($C_s$), the number of disfluencies, pauses, repetitions ($C_d$), and the number of syllables ($C_{sy}$) in the text response ($R$);

determine an efficiency of expression of the text response ($R$) by computing ratio of (i) a fourth communication ability [$\mathcal{P}\{R'\}$] from entropy of a detailed summary ($R'$) of the text response ($R$) to (ii) the third communication ability [$\mathcal{P}\{R\}$] of each of a corresponding text response ($R$) from the set of text responses {$set\ R$};

select an optimal text response ($R^*$) from the set of text responses {$set\ R$} for which difference between efficiency of expression of the text response ($R$) and the efficiency of expression ($\gamma_Q$) of the recognized text ($Q$) is minimal;

convert the optimal text response ($R^*$) to a machine speech response ($R(t)$) via a Text to Speech (TTS) engine; and

communicate via the VUI, the machine speech response ($R(t)$) to the speaker as a response to spoken query sequence ($Q(t)$).

7. The system as claimed in claim 6, wherein the abstract summary ($Q_{abs}$) is obtained from an abstract summarization function (GenAI$_{abs}(x)$) executed by the LLM on the recognized text query, and wherein the detailed summary ($R'$) is obtained via a detailed summary function (GenAI$_{det}(x)$) executed by the LLM on the text response ($R$).

8. The system as claimed in claim 6, wherein the optimal text response ($R^*$) is mathematically represented as

$$R^* = min_R \left( \left( \frac{\mathcal{P}\{R'\}}{\mathcal{P}\{R\}} \right) - \gamma_Q \right)^2$$
.

9. The system as claimed in claim 6, wherein the speaker is a Basic Emergent User (BEU).

10. The method as claimed in claim 6, wherein the optimal machine speech response (R(t)) obtained from the optimal text response ($R^*$) in the speech domain reduces mismatch between a communication ability ($\mathcal{P}\{Q(t)\}$) of the speaker and the communication ability of the VUI ($\mathcal{P}\{R(t)\}$) below a predefined threshold providing most usable response communicated to the speaker for the spoken query sequence ($Q(t)$).

11. One or more non-transitory machine-readable information storage mediums comprising one or more instructions which when executed by one or more hardware processors of a classical computing system cause:

receiving from a speaker via a Voice User Interface (VUI), a spoken query sequence ($Q(t)$) comprising a number of sentences ($C_s$) a number of disfluencies, pauses, repetitions ($C_d$), and a number of syllables ($C_{sy}$);

converting the query sequence ($Q(t)$) to a recognized text ($Q$) via an Automated Speech Recognition (ASR) engine executed by the one or more hardware processors;

computing a first communication ability ($\mathcal{P}\{Q\}$) of the recognized text ($Q$) from entropy of the recognized text ($Q$) based on the number of disfluencies, pauses, repetitions ($C_d$), and the number of syllables ($C_{sy}$) present in the recognized text ($Q$);

determining an efficiency of expression ($\gamma_Q$) of the intent expressed by the recognized text ($Q$) by computing ratio of (i) a second communication ability ($\mathcal{P}\{Q_{abs}\}$) of an abstract summary ($Q_{abs}$) of the recognized text ($Q$) to (ii) the first communication ability ($P\{Q\}$) of the recognized text ($Q$);

generating by a Large Language Model (LLM) executed by the one or more hardware processors a text response ($R$) to the recognized query ($Q$), where the text response ($R$) comprises the number of disfluencies, pauses, repetitions ($C_d$) in the text response ($R$);

computing a third communication ability ($\mathcal{P}\{R\}$) of the VUI from entropy of the text response ($R$) based on the number of disfluencies, pauses, repetitions ($C_d$), and the number of syllables ($C_{sy}$) present in the text response ($R$);

generating by the LLM (i) a detailed summary ($R'$) using a detailed summarization function applied on the text response ($R$), and (ii) a set of text responses {$set\ R$} by varying the number of sentences ($C_s$), the number of disfluencies, pauses, repetitions ($C_d$), and the number of syllables ($C_{sy}$) in the text response ($R$);

determining) an efficiency of expression of the text response ($R$) by computing ratio of (i) a fourth communication ability [$\mathcal{P}\{R'\}$] from entropy of a detailed summary ($R'$) of the text response ($R$) to (ii) the third communication ability [$\mathcal{P}\{R\}$] of each of a corresponding text response ($R$) from the set of text responses {$set\ R$};

selecting an optimal text response ($R^*$) from the set of text responses {$set\ R$} for which difference between efficiency of expression of the text response ($R$) and the efficiency of expression ($\gamma_Q$) of the recognized text ($Q$) is minimal;

converting the optimal text response ($R^*$) to a machine speech response ($R(t)$) via a Text to Speech (TTS) engine; and

communicating via the VUI, the machine speech response ($R(t)$) to the speaker as a response to spoken query sequence ($Q(t)$).

12. The one or more non-transitory machine-readable information storage mediums as claimed in claim 11, wherein the abstract summary ($Q_{abs}$) is obtained from an abstract summarization function ($GenAI_{abs}(x)$) executed by the LLM on the recognized text query, and wherein the detailed summary ($R'$) is obtained via a detailed summary function ($GenAI_{det}(x)$) executed by the LLM on the text response ($R$).

13. The one or more non-transitory machine-readable information storage mediums as claimed in claim 11, wherein the

$$R^* = min_R \left( \left( \frac{\mathcal{P}\{R'\}}{\mathcal{P}\{R\}} \right) - \gamma_Q \right).^2$$

optimal text response ($R^*$) is mathematically represented as

14. The one or more non-transitory machine-readable information storage mediums as claimed in claim 11, wherein the speaker is a Basic Emergent User (BEU).

15. The one or more non-transitory machine-readable information storage mediums as claimed in claim 11, wherein the optimal machine speech response (R(t)) obtained from the optimal text response ($R^*$) in the speech domain reduces mismatch between a communication ability ($\mathcal{P}\{Q(t)\}$) of the speaker and the communication ability of the VUI ($\mathcal{P}\{R(t)\}$)below a predefined threshold providing most usable response communicated to the speaker for the spoken query sequence ($Q(t)$).

System<u>100</u>

Processor(s) <u>104</u>

I/O Interface(s) <u>106</u>

Memory <u>102</u>

Database <u>108</u>

Modules <u>110</u>

FIG. 1A

FIG. 1B

$$R^* = min_R\left(\left(\left(\frac{\mathcal{P}\{R'\}}{\mathcal{P}\{R\}}\right)\right) - \gamma_Q\right)$$

200

receiving from a speaker via a Voice User Interface, a spoken query sequence comprising a number of sentences a number of disfluencies, pauses, repetitions, and a number of syllables — 202

converting the query sequence (Q(t)) to a recognized text (Q) via an Automated Speech Recognition (ASR) engine executed by the one or more hardware processors — 204

computing a first communication ability (P{Q}) of the recognized text (Q) from entropy of the recognized text (Q) based on the number of disfluencies, pauses, repetitions and the number of syllables present in the recognized text (Q) — 206

determining an efficiency of expression of the intent expressed by the recognized text (Q) by computing ratio of (i) a second communication ability of an abstract summary of the recognized text (Q) to (ii) the first communication ability (P{Q}) of the recognized text (Q) — 208

generating by the Large Language Model (LLM) a text response (R) to the recognized query (Q), where the text response (R) comprises the number of disfluencies, pauses, repetitions (C_d) in the text response (R) — 210

A

FIG. 2A

200    A

computing a third communication ability (P{R}) of the VUI from entropy of the text response (R) based on the number of disfluencies, pauses, repetitions, and the number of syllables present in the text response (R);   212

generating by the LLM (i) a detailed summary (R') using a detailed summarization function applied on the text response (R), and (ii)a set of text responses {set R} by varying the number of sentences, the number of disfluencies, pauses, repetitions, and the number of syllables in the text response   214

determining an efficiency of expression of the text response (R) by computing ratio of (i) a fourth communication ability [P{R"}] from entropy of a detailed summary (R') of the text response (R) to (ii) the third communication ability of each of a corresponding text response (R) from the set of text responses {set R}   216

selecting an optimal text response (R*) from the set of text responses {set R} for which difference between efficiency of expression of the text response (R) and the efficiency of expression of the recognized text (Q) is minimal   218

B

**FIG. 2B**

**200**

(B)

converting the optimal text response (R*) to a machine speech response (R(t)) via a Text to Speech (TTS) engine — 220

communicating via the VUI, the machine speech response (R(t)) to the speaker as a response to spoken query sequence (Q(t)) — 222

**FIG. 2C**

FIG. 3

# EP 4 687 138 A1

## EUROPEAN SEARCH REPORT

Europäisches
Patentamt
European
Patent Office
Office européen
des brevets

**Application Number**

EP 25 18 4497

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 573 298 B2 (GOOGLE LLC [US]) 25 February 2020 (2020-02-25) * abstract; figures 2,3A,3B * * column 9, line 40 - column 10, line 3 * ----- | 1-15 | INV. G10L15/22 ADD. G06F40/56 |
| A | US 2017/221471 A1 (SHARIFI MATTHEW [CH] ET AL) 3 August 2017 (2017-08-03) * abstract; figure 1 * * paragraphs [0029], [0033] * ----- | 1-15 | |
| A | US 2023/074406 A1 (BAEUML MARTIN [CH] ET AL) 9 March 2023 (2023-03-09) * abstract; claims 1-6; figure 2 * * paragraphs [0015], [0050], [0064] * ----- | 1-15 | |
| A | US 2016/379638 A1 (BASYE KENNETH JOHN [US] ET AL) 29 December 2016 (2016-12-29) * abstract; figures 1,2 * * paragraphs [0066], [0089] * ----- | 1-15 | |

**TECHNICAL FIELDS
SEARCHED (IPC)**

G10L
G06F

The present search report has been drawn up for all claims

| Place of search | Date of completion of the search | Examiner |
|---|---|---|
| Munich | 6 November 2025 | Zimmermann, Elko |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 4 687 138 A1

## ANNEX TO THE EUROPEAN SEARCH REPORT
## ON EUROPEAN PATENT APPLICATION NO.

EP 25 18 4497

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2025

| Patent document cited in search report | | Publication date | Patent family member(s) | | Publication date |
|---|---|---|---|---|---|
| US 10573298 | B2 | 25-02-2020 | CN | 112119454 A | 22-12-2020 |
| | | | CN | 118471216 A | 09-08-2024 |
| | | | EP | 3602543 A1 | 05-02-2020 |
| | | | EP | 4296846 A2 | 27-12-2023 |
| | | | JP | 7064018 B2 | 09-05-2022 |
| | | | JP | 7486540 B2 | 17-05-2024 |
| | | | JP | 2021513119 A | 20-05-2021 |
| | | | JP | 2022103191 A | 07-07-2022 |
| | | | KR | 20200142066 A | 21-12-2020 |
| | | | KR | 20220133312 A | 04-10-2022 |
| | | | KR | 20240013280 A | 30-01-2024 |
| | | | US | 2019325864 A1 | 24-10-2019 |
| | | | US | 2019348030 A1 | 14-11-2019 |
| | | | US | 2020135181 A1 | 30-04-2020 |
| | | | US | 2020286473 A1 | 10-09-2020 |
| | | | US | 2023031521 A1 | 02-02-2023 |
| | | | WO | 2019204252 A1 | 24-10-2019 |
| US 2017221471 | A1 | 03-08-2017 | CN | 108604446 A | 28-09-2018 |
| | | | CN | 116504221 A | 28-07-2023 |
| | | | EP | 3378059 A1 | 26-09-2018 |
| | | | EP | 4002353 A1 | 25-05-2022 |
| | | | EP | 4478349 A2 | 18-12-2024 |
| | | | JP | 6727315 B2 | 22-07-2020 |
| | | | JP | 6903787 B2 | 14-07-2021 |
| | | | JP | 7202418 B2 | 11-01-2023 |
| | | | JP | 2019511034 A | 18-04-2019 |
| | | | JP | 2020126262 A | 20-08-2020 |
| | | | JP | 2021144759 A | 24-09-2021 |
| | | | KR | 20180098654 A | 04-09-2018 |
| | | | KR | 20200009133 A | 29-01-2020 |
| | | | KR | 20200009134 A | 29-01-2020 |
| | | | KR | 20210021407 A | 25-02-2021 |
| | | | US | 2017221471 A1 | 03-08-2017 |
| | | | US | 2017221472 A1 | 03-08-2017 |
| | | | US | 2017316774 A1 | 02-11-2017 |
| | | | US | 2019019501 A1 | 17-01-2019 |
| | | | US | 2020013387 A1 | 09-01-2020 |
| | | | US | 2021142779 A1 | 13-05-2021 |
| | | | US | 2023267911 A1 | 24-08-2023 |
| | | | US | 2025131909 A1 | 24-04-2025 |
| | | | WO | 2017131924 A1 | 03-08-2017 |
| US 2023074406 | A1 | 09-03-2023 | NONE | | |
| US 2016379638 | A1 | 29-12-2016 | US | 2016379638 A1 | 29-12-2016 |

EPO FORM P0459

For more details about this annex : see Official Journal of the European Patent Office, No. 12/82

page 1 of 2

22

## ANNEX TO THE EUROPEAN SEARCH REPORT
## ON EUROPEAN PATENT APPLICATION NO.

EP 25 18 4497

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2025

| Patent document cited in search report | Publication date | Patent family member(s) | Publication date |
|---|---|---|---|
| | | WO 2016209924 A1 | 29-12-2016 |

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421057749